# EUROPEAN PATENT SPECIFICATION

(11) **EP 1 050 566 B1**
(45) Date of publication and mention of the grant of the patent: **09.08.2006**
(21) Application number: 00109288.1
(22) Date of filing: 28.04.2000
(51) Int. Cl.: C09J 7/02, B65D 75/58

(54) **Reclosable self-adhesive closing device**
Wiederverschliessbarer Selbstklebeverschluss
Dispositif de fermeture auto-adhésif refermable

(30) Priority: 05.05.1999 IT MI990968
(43) Date of publication of application: 08.11.2000
(73) Proprietor: Irplast S.p.A., 50050 Limite sull'Arno, Firenze (IT)
(72) Inventor: Soluri, Giacomo, 50053 Empoli, Firenze (IT); Bandinelli, Alessandro, 50050 Cerreto Guidi, Firenze (IT); Scappini, Roberto, 50059 Vitolini-Vinci, Firenze (IT); Scarati, Mario, 20100 Milano (IT)
(74) Representative: Sama, Daniele

(56) References cited:
- EP-A- 0 250 353
- DE-A- 3 132 637
- US-A- 3 301 741
- US-A- 4 049 847
- US-A- 5 782 496

## Description

This invention describes a reclosable easy-open closing device, used for closure or closing systems, that can be applied to packs, containers, and in particular to food flexible packaging containers.

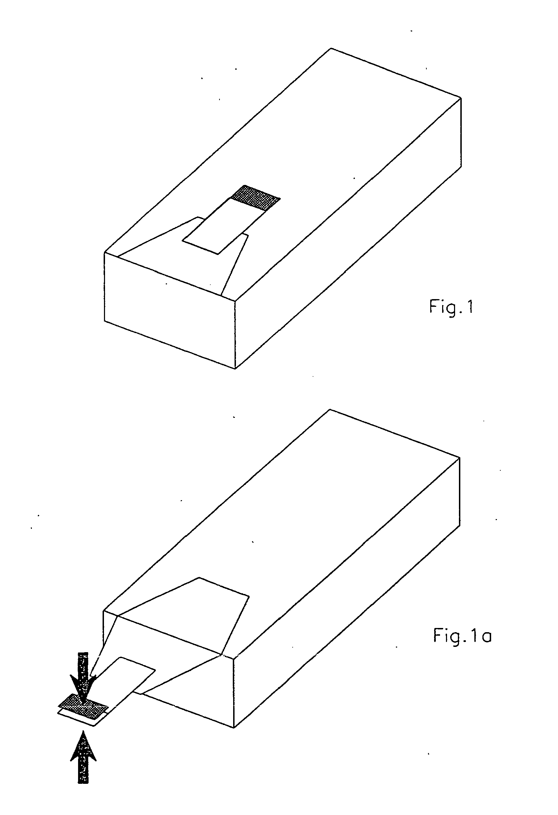

Various types of reclosable easy-open closing devices are known in the art. Typically, some of said easy-open closures are made with reverse printed adhesive coated plastic film tapes. These tapes are unwound in a direction perpendicular to the opening edge of the pack, as shown in Fig. 1. In this case the easy opening feature of the pack is obtained through the application of a paper strip or a plastic film strip applied to the free end of the adhesive tape, to neutralize the adhesive and permits the handing of the easy open device.

WO 99/40159 discloses a self-adhesive label roll in the form of a printable continuous tape from which individual self-adhesive labels can be detached. The continuous tape does not have a carrier band; one tape surface brings a sticky layer, the other surface being printable and provided with an anti-stick layer. Labels can be handled by arranging and dimensioning adhesive-free areas on the tape surface opposite to that printable, in such a way that a self-adhesive label can be touched on the adhesive-free area.

USP 4,889,234 discloses a label using a single type of adhesive which will provide a permanent bond on one area of the label and a weaker, removable adhesive on other areas of the label. In said latter areas the permanent adhesive is applied in a fine pattern. The label may be mounted on a backing strip with a release layer between the adhesive and the backing strip so that the labels may be dispensed over a peeling blade from a roll in the usual manner.

Fig. 1 shows in details a pack made of PE films and containing disposable tissues (e.g. Scottex® ), where the easy-open closure is obtained by applying to the pack one piece of a transversally cut adhesive tape, bearing one strip of plastic film or paper applied under the free front-edge, in order to allow an easy handling and opening of the pack by the user. The closure system is shown in Fig. 1a, where it is shown said paper or film strip applied on the adhesive tape.

This easy-open reclosable closing device is widely used, because it allows the pack to be reclosed after use so to assure the integrity of the content over long periods of time. This system is widely used in food flexible packs, such as packs containing biscuits, flour, pasta, coffee, etc. See for example EP 129,094.

Another known type of easy-open reclosable closure is formed by a tape coated with adhesive only on one side, as before, wherein the non-adhesive easy opening strip is obtained by folding one longitudinal edge of the tape upon the adhesive side for a width of a few millimeters, in such a way that said non-adhesive area, after the transversal cutting of the tape, can be taken with the fingers in order to open the pack.

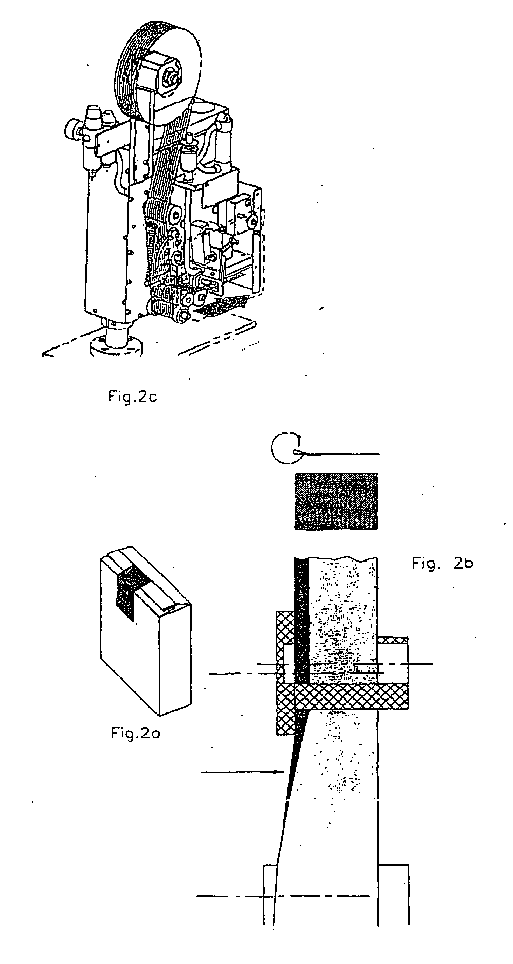

Fig. 2a shows this easy-open device applied to a flexible pack for foodstuff. Fig. 2b shows the longitudinal folding system that forms the said adhesive-free edge on an the adhesive tape. Fig. 2c shows the machine used for folding longitudinally the adhesive tape and applying the said closing device of Fig. 2b. The machine of Fig. 2c is commercially available with the device of the prior art. As seen, said folding is effected at the expense of the width of the tape. In the upper part of Fig. 2b it is shown a front sectional view of the adhesive tape showing the direction of the longitudinal folding of the tape. As mentioned, the longitudinal folding of the tape is carried out by the same machine that applies the closure system to the pack. After the folding step, the machine cuts transversal sections from the tape, that are applied onto the packs in the areas where the perforations or nicks, needed to facilitate the opening of the pack, are present. Otherwise, when the pack is hermetically sealed, as it happens for foodstuff packs, the closure system with the requested dimensions is applied onto the upper part of the pack that must be cut by the user to open the pack. The pack is closed after use by folding its upper part and keeping it in position with the closing device above described. Such a type of closure is described for instance in EP 250,353.

The disadvantage of both said closure systems resides in the fact that they require a greater amount of material for their manufacture. In the first of said systems above described, with the adhesive tape it is also necessary to use another material in order to neutralise the section of the adhesive side of the tape requested for the easy-open closure. In the second closure system it is necessary that the adhesive tape from which the closure is obtained had a larger width than the closure pad, in order to obtain the non-adesive part. There are disadvantages also in the application process of said closure systems onto the containers: in the former closure system it is necessary the use of an applicator of the non-adhesive material (cut from a roll or dispensed in precut formats) that neutralises the adhesive area. The manufacture of the second closure system is complex. Both systems require an accurate control of the application and positioning of said closures to the packs and containers. Notwithstanding the accurate control, interruptions of the manufacturing process are very frequent due to jammings and consequent machine downtime.

There was the need of a reclosable easy-open closure system that could eliminate the drawbacks of the existing systems, and in particular a device that could be manufactured by a simpler process and would require a lower amount of materials than those of the prior art, a simpler operation of the production lines and thus lower production costs.

It has been unexpectedly found by the Applicant a reclosable easy-open closure device that allows the above mentioned technical problem to be solved

The reclosable easy-open closure systems of the present invention are obtainable by transversal cutting a reel substantially formed of an one side coated adhesive tape based on a plastic film substrate, having on one side a longitudinal band coated with a removable adhesive selected from the following:
- an acrylic water-based emulsion adhesive based on esters C₃, to C₅ of acrylic acid or
- a hot-melt adhesive, chosen between thermoplastic rubbers or hydrocarbon resins, optionally their compounds;
and a non adhesive stripe or band on one of the longitudinal edges of said reel, being the width of said reel equal to the length of the easy-open closure device applied onto the packs.

The reels are obtainable from an one side coated adhesive tape based on a plastic film substrate, the adhesive coating being applied longitudinally, in the sense of the roll direction, in longitudinal stripes or band-shaped sections separated by longitudinal sections having no adhesive coating, said tape being wound up forming an adhesive coated roll having a partial adhesive coating (mill roll), the mill roll being then longitudinally slit into many reels of smaller width.

Therefore the slitting pattern creates small width reels having on one of their longitudinal edges an area with no adhesive coating.

In particular on one side of the tape there is one larger longitudinal adhesive coated stripe or band, and the non adhesive coated stripe or band is located on one of the two longitudinal edges; the width of the adhesive-free area is such that it can be easily taken to open the pack, once the closure system has been applied.

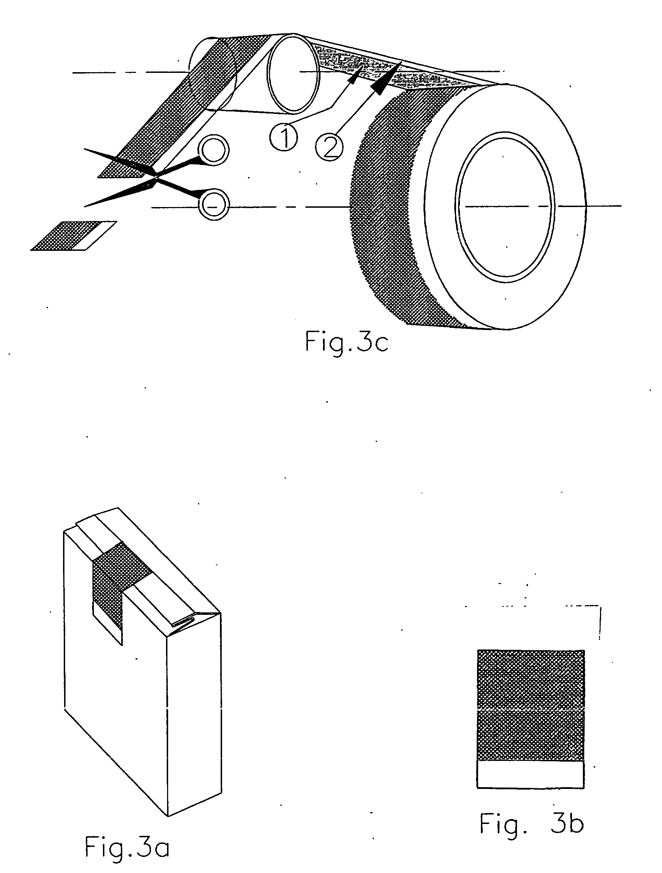

Fig. 3a shows the closure system of this invention applied to a flexible pack for foodstuff, wherein the upper part of the pack is shown folded upon itself. Fig. 3b is a front view of the reclosable easy-open closing device of Fig. 3a and the dotted area corresponds to the adhesive coated area, whereas the blank area has no adhesive. Fig. 3c represents the setup of the machine part Fig. 2c that cuts the closure device of Fig. 3b from the adhesive coated reels. In Fig. 3c, 1 indicates the band or stripe of the tape with adhesive coating; 2 indicates the band or stripe with no adhesive coating. Fig. 3c shows that the tape is transversally cut by the machine into formats (reclosable easy-open closing devices) that are applied to the packs to form the easy-open closing system of the invention.

The machines of Fig. 2c used for applying the closure device of the invention can be simplified by eliminating the longitudinal folding system or the adhesive neutralization system.

Generally the width of the tape, that is supplied in reels, is preferably comprised between about 20 and about 100 mm, more preferably between 25 and 60 mm (the reel length can be of the order of magnitude of thousands of metres, as requested).

The longitudinal band with no adhesive coating has a width preferably comprised between 5 and 15 mm.

The reclosable easy open closing device according to the invention has a length comprised between 25 and 60 mm and it is obtained by cutting transversally the tape from a reel having a width comprised in the above indicated range. Optionally, the tape or the plastic film of the closure system of the invention can be printed. In such a case, the dimensions of the printed pattern determine those of the closing device. Sometimes, specific photocell "spots" can be printed so as to assist in the determination of the position where the tape must be cut.

The plastic film used as a base of the adhesive tape can be preferably bioriented polypropylene, bioriented polyester, polyethylene, or laminates, also made of the above mentioned films.

The adhesives used are available in the market, and are chosen amongst those allowing a removable and reclosable adhesive closure to be made. The adhesive is an acrylic water-based emulsion adhesive, based on esters C₃ to C₅ of acrylic acid such as butyl acrylate; or alternatively, a hot-melt adhesive, such as those made of thermoplastic rubbers or hydrocarbon resins, optionally their compounds, can be used.

The process for manufacturing the reel from which is obtainable the adhesive tape for the closure system of the invention, in the case that the adhesive for application is an acrylic aqueous emulsion, comprises the following steps:
1) coating one side of the base plastic film, preferably having a width of approx. 1300 mm, with an excess of an aqueous adhesive emulsion by means of an application roller;
2) removing the excess of aqueous emulsion and metering the quantity remaining on the tape, preferably with a wire-wound bar (Mayer bar), in such a way that the metered amount of adhesive per unit surface (dry weight) is preferably comprised in the range from about 16 to about 18 g/m²;
3) removing the adhesive coating, creating a longitudinal stripe or band pattern, preferably by passing the coated surface of the tape under a set of doctor blades that create a longitudinal pattern of alternated coated and uncoated areas;
4) evaporation of the aqueous medium, preferably by passing the coated tape through a drying oven at temperatures from about 80 to about 120°C;
5) winding the coated film into a roll (mill roll) and subsequent slitting of the roll into smaller width reels, their width being comprised between about 20 and about 100 mm, so that in said reels, that are used on the application machines, the stripe or band with no adhesive is located on one of the two longitudinal edges of the reel.

By transversal cutting of the tape from the smaller width reel for a length comprised between about 25 and about 60 mm, it is obtained of the closure device according to the invention.

When a hot-melt adhesive is used, the application to the tape is performed according to the processes known in the art and the closure device is obtained by carrying out steps 5) and 6) above described on the coated tape (reel). In particular, in steps 1) and 2) the adhesive coating is made by extrusion of the molten adhesive and metering of the adhesive in its molten state, preferably with a Mayer bar or similar devices. This adhesive is applied to the entire surface of one side of the tape. Step 3) is substantially the same as reported above, with the creation of a longitudinal pattern of alternated coated and uncoated areas or bands, obtained through passage of the coated tape under a set of doctor blades that remove the molten hot-melt along specific stripes or bands. Step 4) is not carried out. As said, Step 5) and 6) are the same as those described before.

The Applicant has surprisingly found that in the process above described wherein the adhesive is preferably based on acrylic C₃-C₅ esters, the use of doctor blades allows to remove completely the adhesive from the sections of the coated tape intended to remain free from the adhesive.

This fact is surprising and unexpected and allows to avoid the step of adhesive neutralization on that part of the tape that must remain adhesive free. This allows to have a simpler manufacturing process and reduce significantly the production costs.

The closure device described in this invention can be applied to food packs, flexible packs, envelopes, folders, security envelopes, and other types of packs.

The machines used for applying the closure device of the invention allow an higher productivity with respect to the closure devices of the prior art. Further the commercially available machines of Fig. 2c using the closure device of the present invention can be simplified by eliminating the longitudinal folding system or the adhesive neutralization system.

Machine jammings are infrequent, even at the highest application speeds, and also the percentage of discarded or unusable packs is much lower than that obtained with the closure devices of the prior art. Tests carried out by the Applicant have shown that by using the machine for creating the closure device shown in Fig. 2b the longitudinal folding of the tape is the critical step of the process, and this creates a number of defective packs higher than that of the process of the present invention.

Moreover, as already mentioned, the system described in this invention yields substantial savings in the amount of material used (both for the film and the adhesive).

The following example illustrates the invention, without limiting its scope and application.

### EXAMPLE 1

A bioriented polypropylene film having a width of 620 mm and a thickness of 50 µm has been reverse printed with rotogravure techniques with a repeat length of 45 mm.

The printed surface has been coated with an aqueous acrylic adhesive (Primal® PS 83 D, supplied by Rohm and Haas) based on butyl acrylate (concentration of the ester in the emulsion: 53% by weight).

The applied coating weight per unit area, after metering with a Mayer bar, was of 28 g/m².

The longitudinal patterning has been made by creating 12 longitudinal uncoated areas or bands having a width of 10 mm, alternated to 12 longitudinal adhesive coated areas or bands having a width of 40 mm. The coated tape has two uncoated edge trims having a width of 10 mm each. This process has been carried out with the use of an array of doctor blades made of flexible hardened steel.

After the coating, removal and doctoring of the excess adhesive, the aqueous acrylic emulsion on the coated tape has been dried in a drying oven at a temperature comprised between 80°C and 120°C.

The coated mill-roll has been slit into reels having a width of 50 mm, in such a way that the band located at one of the longitudinal edges of the tape has no adhesive coating.

These reels, made of a reverse printed 20 µm bioriented polypropylene film laminated with a 25 µm cast polypropylene film, have been used to form a reclosable easy-open closing device on a 500-gram square-bottomed pack of pasta.

The closure of the heat sealed packs, once opened as in the present case at their upper edge, was performed by folding the upper part of the pack next to said edge so to form three consecutive folds and keeping in position said folds by application of the reclosable easy-open closing device above described.

The process for applying to the above packs the reclosable easy-open closing device of the invention is the following.

The coated slit reel is unwound in such a way that the direction of unwinding is transversal with respect to that of the pack. The application machine cuts transversally the tape from said reel, as shown in Fig. 3c, obtaining formats of partial adhesive coated tape having the size of 50 X 45 mm, that are applied transversally on the upper part of the pack as shown in Fig. 3a. Said device can be re-applied to the pack many times after opening of the pack to reclose the pack.

## Claims

1. A reel from which are obtainable by transversal cutting reclosable easy-open closure devices, said reel formed of a tape based on a plastic film substrate having on one side one longitudinal band coated with a removable adhesive selected from the following:
- an acrylic water-based emulsion adhesive based on esters C₃ to C₅ of acrylic acid or
- a hot-melt adhesive, chosen between thermoplastic rubbers or hydrocarbon resins, optionally their compounds;
and a non adhesive stripe or band on one of the longitudinal edges of said reel, being the width of said reel equal to the length of the easy-open closure device.

2. The reel according to Claim 1, wherein on the adhesive side of the tape there is one larger longitudinal adhesive coated stripe or band and the non adhesive coated stripe or band is located in the correspondence of one of the two longitudinal edges.

3. The reel according to Claims 1 and 2, where the width of the reel is comprised between about 20 mm and about 100 mm, and preferably between about 25 mm and about 60 mm.

4. The reel according to Claims 1-3, wherein the width of the longitudinal band with no adhesive coating located on one edge of the tape is comprised between 5 and 15 mm.

5. The reel according to Claims 1-5, wherein the plastic film of the tape is formed of bioriented polypropylene, bioriented polyester, polyethylene, or laminates made of the above mentioned films.

6. Process for manufacturing the reel of claims 1-5, the adhesive being an acrylic aqueous emulsion, comprising the following steps:
1) coating one side of the base plastic film, preferably having a width of approx. 1300 mm, with an excess of an aqueous adhesive emulsion by means of an application roller;
2) removing the excess of aqueous emulsion and metering the quantity remaining on the tape, preferably with a wire-wound bar (Mayer bar), in such a way that the metered amount of adhesive per unit surface (dry weight) is preferably comprised in the range from about 16 to about 18 g/m²;
3) removing the adhesive coating, creating a longitudinal stripe or band pattern, preferably by passing the coated surface of the tape under a set of doctor blades that create a longitudinal pattern of alternated coated and uncoated areas;
4) evaporation of the aqueous medium, preferably by passing the coated tape through a drying oven at temperatures from about 80 to about 120°C;
5) winding the coated film into a roll (mill roll) and subsequent slitting of the roll into smaller width reels, their width being comprised between about 20 and about 100 mm, so that in said reels, that are used on the application machines, the stripe or band with no adhesive is located on one of the two longitudinal edges of the reel.

7. Process according to claim 6 wherein the adhesive is a hot-melt adhesive wherein in steps 1) and 2) the adhesive coating is made by extrusion of the molten adhesive and metering of the adhesive in its molten state, preferably with a Mayer bar or similar devices, the adhesive being applied to the entire surface of one side of the tape; step 4) being omitted.

8. An adhesive coated roll (mill roll) based on a plastic film substrate having on one side a partial adhesive coating made of a removable adhesive selected from the following:
- an acrylic water-based emulsion adhesive based on esters C₃ to C₅ of acrylic acid or
- a hot-melt adhesive, chosen between thermoplastic rubbers or hydrocarbon resins, optionally their compounds;
said adhesive coating applied longitudinally, in the sense of the roll direction, in longitudinal stripes or band-shaped sections separated by longitudinal sections having no adhesive coating.

## Patentansprüche

1. Eine Rolle von der durch transversales Schneiden wiederverschließbare, leicht zu öffnende Verschlußmittel erhältlich sind, wobei die Rolle aus einem Band gebildet ist, das auf einem Kunststofffilm-Substrat basiert, das auf einer Seite ein longitudinales Band aufweist, welches mit einem entfernbaren Haftmittel beschichtet ist, der aus den folgenden ausgewählt ist:
- ein wasserbasierter Acrylemulsion-Kleber, der auf C₃ bis C₅- Esthern der Acrylsäure basiert, oder
- ein Heißschmelzkleber, der ausgewählt ist aus thermoplastischen Gummis oder Kohlenwasserstoff Harzen, optional,ihre Verbindungen;
sowie einem nicht-klebenden Streifen oder Band auf einer der longitudinalen Kanten besagter Rolle, wobei die Breite der besagten Rolle gleich der Länge des leicht zu öffnenden Verschlußmittels ist.

2. Die Rolle nach Anspruch 1, wobei auf der Haftseite des Bandes ein längerer, longitudinaler, mit Haftmittel beschichteter Streifen oder Band vorgesehen ist und der nicht-haftend beschichtete Streifen oder Band entsprechend auf einer der beiden longitudinalen Kanten angeordnet ist.

3. Die Rolle nach Anspruch 1 oder 2, wobei die Breite der Rolle zwischen 20 mm und etwa 100 mm beträgt, vorzugsweise zwischen 25 mm und etwa 60 mm.

4. Die Rolle nach einem der Ansprüche 1-3, wobei die Breite des longitudinalen Bandes ohne Haftschicht, die an einer Kante des Bandes angeordnet ist, zwischen 5 und 15 mm beträgt.

5. Die Rolle nach einem der Ansprüche 1-5, wobei der Kunststofffiüm, aus dem das Band gebildet ist, aus bi-orientiertem Polypropylen, bi-orientiertem Polyester, Polyethylen oder Laminaten aus den oben aufgeführten Filmen gebildet ist.

6. Verfahren zur Herstellung einer Rolle nach einem der Ansprüche 1-5, bei der das Haftmittel eine wässrige Acrylemulsion ist, enthaltend die folgenden Schritte:
1) Beschichten einer Seite des Basis-Kunststofffilms, der vorzugsweise eine Breite von etwa 1300 mm hat, mit einem Überschuß an wässriger Haftemulsion durch einen Anwendungsroller;
2) Entfernen des Überschusses an wässriger Emulsion und zuteilen der Menge, die auf dem Band verbleibt, vorzugsweise mit einem Stahl-gewickelten Stab (Mayer Stab), derart, daß die zugeteilte Menge Haftmittel pro Oberflächeneinheit (Trockengewicht) vorzugsweise im Bereich von etwa 16 bis etwa 18 g/m² liegt;
3) Entfernen der Haftschicht, Schaffen eines longitudinalen Streifen oder Bandmusters, vorzugsweise durch Hindurchführen der beschichteten Oberfläche des Bandes unter einem Satz von Doktorklingen, die ein longitudinales Muster an abwechselnd beschichteten und unbeschichteten Flächen schaffen;
4) Verdampfen des wässrigen Mediums, vorzugsweise durch Hindurchführen des beschichteten Bandes durch einen Trockenofen bei Temperaturen zwischen etwa 80 und etwa 120°C;
5) Aufwickeln des beschichteten Films zu einer Rolle (Mühlenrolle) und nachfolgendes Schlitzen der Rolle zu Rollen mit schmaleren Breiten, deren Breite zwischen etwa 20 und etwa 100 mm liegt, so daß bei besagten Rollen, die in den Auftrage-Maschinen verwendet werden, der Streifen oder das Band ohne Haftmittel auf einer der beiden longitudinalen Kanten der Rolle angeordnet ist.

7. Verfahren nach Anspruch 6, wobei das Haftmittel ein Heißschmelz-Haftmittel ist, wobei in den Schritten 1) und 2) die Haftbeschichtung durch Extrudieren eines geschmolzenen Klebers und Auftragen des Haftmittels im geschmolzenen Zustand hergestellt wird, vorzugsweise mit einem Mayer-Stab oder ähnlichen Geräten, wobei das Haftmittel auf die gesamte Oberfläche auf einer Seite des Bandes aufgetragen wird; Schritt 4 wird weggelassen.

8. Eine haftbeschichtete Rolle (Mühlenrolle) basierend auf einem Kunststofffilm-Substrat, das auf einer Seite eine Teilbeschichtung mit einem Haftmittel aufweist, die aus einem lösbaren Haftmittel hergestellt ist, das aus den folgenden ausgewählt ist:
- ein wasserbasierter Acrylemulsion-Kleber, der auf C₃ bis C₅- Esthern der Acrylsäure basiert, oder
- ein Heißschmelzkleber, der ausgewählt ist aus thermoplastischen Gummis oder Kohlenwasserstoff-Harzen, optional ihre Verbindungen;
wobei die Haftbeschichtung longitudinal aufgetragen ist, im Sinne der Rollrichtung, in longitudindalen Streifen oder bandförmigen Abschnitten, die durch longitudinale Abschnitte getrennt sind, die keine Haftbeschichtung haben.

## Revendications

1. Rouleau à partir duquel on peut obtenir, par découpe transversale, des dispositifs de fermeture faciles à ouvrir et refermables, ledit rouleau étant formé d'une bande à base d'un substrat en film plastique ayant, sur un côté, une bande longitudinale revêtue d'un adhésif amovible choisi parmi les suivants :
- un adhésif en émulsion aqueuse acrylique à base d'esters en C₃ à C₅ d'acide acrylique, et
- un adhésif thermofusible, choisi parmi les caoutchoucs thermoplastiques ou les résines hydrocarbonées, et éventuellement leurs composés ;
et une bande ou un ruban non-adhésif sur l'un des bords longitudinaux dudit rouleau, la largeur dudit rouleau étant égale à la longueur du dispositif de fermeture facile à ouvrir.

2. Rouleau selon la revendication 1, dans lequel, sur le côté adhésif de la bande, se trouve une bande ou un ruban revêtu d'adhésif longitudinal plus large, et la bande ou le ruban non revêtu d'adhésif est localisé en correspondance de l'un des deux bords longitudinaux.

3. Rouleau selon les revendications 1 et 2, dans lequel la largeur du rouleau est comprise entre environ 20 mm et environ 100 mm, et de préférence entre environ 25 mm et environ 60 mm.

4. Rouleau selon les revendications 1 à 3, dans lequel la largeur du ruban longitudinal sans revêtement adhésif localisé sur un bord de la bande est comprise entre 5 et 15 mm.

5. Rouleau selon les revendications 1 à 5, dans lequel le film plastique de la bande est formé de polypropylène bi-orienté, de polyester bi-orienté, de polyéthylène, ou de stratifiés faits des films susmentionnés.

6. Procédé pour fabriquer le rouleau des revendications 1 à 5, l'adhésif étant une émulsion aqueuse acrylique, comprenant les étapes suivantes :
1) revêtement d'un côté du film plastique de base, ayant de préférence une largeur d'environ 1300 mm, avec un excès d'une émulsion adhésive aqueuse au moyen d'un rouleau applicateur ;
2) élimination de l'excès d'émulsion aqueuse et dosage de la quantité restant sur la bande, de préférence avec une barre en spirale (barre Mayer), de telle sorte que la quantité dosée d'adhésif par unité de surface (poids à sec) soit de préférence comprise dans la plage allant d'environ 16 à environ 18 g/m² ;
3) élimination du revêtement adhésif, ce qui crée un motif de bande ou de ruban longitudinal, de préférence par passage de la surface revêtue de la bande sous un ensemble de lames docteur qui créent un motif longitudinal de zones alternées revêtues et non-revêtues ;
4) évaporation du milieu aqueux, de préférence par passage de la bande revêtue dans un four de séchage à des températures d'environ 80 à environ 120°C ;
5) enroulement du film revêtu en une bobine (bobine mère) et ensuite division de la bobine en rouleaux de plus petite largeur, leur largeur étant comprise entre environ 20 et environ 100 mm, de sorte que, dans lesdits rouleaux, qui sont utilisés sur les machines d'application, la bande ou le ruban sans adhésif soit localisé sur l'un des deux bords longitudinaux du rouleau.

7. Procédé selon la revendication 6, dans lequel l'adhésif est un adhésif thermofusible, et dans lequel, dans les étapes 1) et 2), le revêtement d'adhésif est réalisé par extrusion de l'adhésif fondu et dosage de l'adhésif dans son état fondu, de préférence avec une barre Mayer ou des dispositifs similaires, l'adhésif étant appliqué à toute la surface d'un côté de la bande ; l'étape 4) étant omise.

8. Bobine revêtue d'adhésif (bobine mère) à base d'un substrat en film plastique ayant, sur un côté, un revêtement adhésif partiel fait d'un adhésif amovible choisi parmi les suivants :
- un adhésif en émulsion aqueuse acrylique à base d'esters en C₃ à C₅ d'acide acrylique, ou
- un adhésif thermofusible, choisi parmi les caoutchoucs thermoplastiques et les résines hydrocarbonées, et éventuellement leurs composés ;
ledit revêtement adhésif étant appliqué longitudinalement, dans le sens de la direction de la bobine, en bandes longitudinales ou en sections en forme de ruban séparées par des sections longitudinales n'ayant pas de revêtement adhésif.
